Europäisches Patentamt

European Patent Office

Office européen des brevets

(11) Publication number: **0 255 176 B1**

(12) **EUROPEAN PATENT SPECIFICATION**

(45) Date of publication of patent specification: **13.03.91**   (51) Int. Cl.5: **G11B 5/704**

(21) Application number: **87201396.6**

(22) Date of filing: **21.07.87**

(54) Tape of a synthetic material with a high modulus of elasticity provided with a coating and process for the production thereof.

(30) Priority: **26.07.86 NL 8601934**

(43) Date of publication of application:
**03.02.88 Bulletin 88/05**

(45) Publication of the grant of the patent:
**13.03.91 Bulletin 91/11**

(84) Designated Contracting States:
**AT BE CH DE ES FR GB GR IT LI NL SE**

(56) References cited:
**EP-A- 0 123 081**
**EP-A- 0 167 187**
**DE-A- 2 743 916**
**DE-A- 2 752 741**
**DE-A- 3 533 162**

(73) Proprietor: **STAMICARBON B.V.**
**Mijnweg 1**
**NL-6167 AC Geleen(NL)**

(72) Inventor: **van der Heiden, Leonardus Hendrikus**
**Koempel 81**
**NL-6372 NG Landgraaf(NL)**
Inventor: **Rutten, Hendrikus Johannes Jozef**
**Zwanenstraat 17**
**NL-6211 BP Maastricht(NL)**

**Description**

The invention relates to a ribbon-shaped support of a synthetic material with a high modulus of elasticity, suitable for the tape mentioned in the title, and to a process for the production of such a tape.

The invention also relates to a tape,comprising a support of a synthetic material, of which at least one side is provided with a the coating of polyether-urethane resin.

More in particular, the invention relates to a tape suitable for application as a magnetic tape, for example in audio, video and/or computer applications.

In a large number of these applications a tape is unwound from a spool, fed along a recording and/or reproducing device and wound onto another spool. Under operating conditions, the greatest mechanical load of a tape occurs when the spools are started and stopped.

Important mechanical properties of such tapes are the modulus of elasticity and the stress at break.

The modulus of elasticity determines the degree of deformation, in longitudinal and transverse direction, for example in starting and/or stopping the spools and, consequently, the momentary quality of the transmission of information from and/or to the recording/reproducing device.

The stress at break of the material of the support determines the minimum thickness required to prevent the tape from snapping. A spool of certain dimensions can, of course, hold more thin tape than thick tape.

Tapes of synthetic material provided with a coating are known, for example from EP-A-123081. This publication relates in particular to a coating of a polyether-urethane resin which can be applied to a polyester support having a relatively low modulus. The disadvantage of a polyester support for magnetic tapes is that a support with a certain minimum required strength and dimensional sta-bility is relatively thick.

The aim of the invention is to provide a ribbon-shaped sup-port suitable for a tape, of a synthetic material with a high modulus of elasticity and such a high stress at break that the tape and ribbon-shaped support may be thinner than has so far been possible and to provide a coated tape comprising such a support.

The invention comprises a ribbon-shaped support of a synthe-tic material with a modulus of elasticity between 6 GPa and 140 GPa and a thickness between 1 and 25 $\mu$m, preferably between 5 and 10 $\mu$m, obtained by thermoreversible gelation of a solution of a polyethylene with an average molecular weight between $0.4 \cdot 10^6$ and $10.0 \cdot 10^6$, followed by stretching of the gel thus obtained, which is charac-terized in that the surface of at least one side of the support is chemically modified.

Such a ribbon-shaped support is particularly suitable for application as a support for a tape as implied in the title. One embo-diment of the support according to the invention is characterized in that molecules groups, preferably acrylate groups, are grafted on the surface referred to.

The grafting of molecules or molecule groups on the surface of the support results in a considerably improved adhesion to a coating to be applied to that surface.

The particular advantage of using acrylate groups is that such groups can be grafted onto the surface by means of electron radiation.

Thermoreversible gelation is in this context understood to be converting a polyethylene dissolved in a solvent into a gel, exclusi-vely by means of a (rapid) drop in temperature and not, for example, by means of a change in the concentration of the solution.

It should be mentioned that a process comprising gelation of a polyethylene solution followed by stretching to form a film or tape is known per se from EP-A-181.016 or GB 2.164.897.

The aim of that process is to improve the properties of the synthetic material involved per se and does not relate to a support and a tape as implied in the title.

The tape according to the invention comprises a support according to the invention, which is chemically modified at least at one side and provided at that modified side with a coating of a polyether-urethane resin.

The thickness of the support according to the invention is lying between 1 and 25 $\mu$m, preferably between 5 and in $\mu$m, which means that with the same thickness of the coating, 20-40 % longer tape can be realized per unit of volume (dimensions of the spool) than is possible in the case of the known polyester tape. The tape according to the invention can be applied to particular advantage as magnetic tape.

One embodiment of the tape according to the invention is characterized in that the surface of the support to which the polyether-urethane resin is applied is modified chemically by molecule grafting. This results in a better adhesion of the coating to the sur-face of the support.

Preferably, a polyether-urethane resin modified with acryl is used as coating. This presents the advantage that this type of resin can be hardened by means of electron irradiation, which means that the har-dening can take place within a very short time, in some tenths of seconds, and that the material of the support is not thermally loaded.

One embodiment of the tape according to the invention is characterized in that magnetizable particles are

2

embedded in the polyether-urethane resin. This embodiment comprises tapes that are used as data carriers in audio and/or video equipment and in computer systems.

The common magnetizable pigments, available on the market, may be used as magnetizable particles. Examples are those available under the trade name 'X 1000R' produced by Titan or under the trade name 'Pferrico 2674' and 'Pferrox 2228HC' produced by Pfizer.

The invention also relates to a process for the production of a tape, comprising the application of a coating of a polyether-urethane resin to at least one side of a synthetic support and the hardening thereof by means of electron irradiation, characterized in that the support has a modulus of elasticity between 6 and 150 GPa, a thickness between 1 and 25 $\mu$m, and is produced by means of thermo-reversible gelation of a polyethylene solution with a weight-average molecular weight between $0.4 . 10^6$ and $10.0 . 10^6$, followed by stretching of the gel and after-treatment comprising the chemical modification of the surface of at least one side.

with the process according to the invention a tape can be obtained which presents the combined advantages of high breaking strength and small thickness. This means that less raw material is required for the production thereof and that a unit of volume of the tape can contain more data.

One embodiment of the process according to the invention is characterized in that the after-treatment comprises chemical modifica-tion of at least one side of the surface of the tape, preferably by grafting molecules or molecular groups, preferably acrylate groups, onto the surface before applying the coating. Such a treatment strongly improves the adhesion to a coatinG to be applied to that sur-face. The after-treatment referred to may also comprise drying, which may also partially be carried out before the stretching, if desired only partially. The tape may be also subjected to drying and/or compression.

A special characteristic of the process according to the invention is that the support provided with only one (not yet har-dened) coating can be irradiated from the back of the support, that is, from the side of the support to which no coating has been applied.

A particularly preferred embodiment of the process according to the invention comprises:

- grafting acrylate groups onto the surface(s) of the support by electron radiation;
- applying a coating modified with acryl, and hardening same by means of electron radiation, which results in the additional advantage of extra cross-linking in the polyethylene support. The tape according to the invention can, for example, be produced as follows.

The polyethylene support can be produced from a very stiff and strong film, a process for the production of which is described in e.g. EP-A-181.016 or GB-A-2.164.897.

Both uni- and biaxially stretched film may be used to produce a tape according to the invention.

The invention will now be elucidated with reference to a number of examples.

Examples I and II

The polyethylene film used for these experiments was made of a cast film of 1.5 wt.% Hostalen GUR 412 solution in decalin.

The film was stretched uniaxially 50 times and had a tensile strength of about 1.5 GPa and an E-modulus of about 60 GPa. The widths of the supports produced from the film ranged from 2 to 4 mm.

The coating was applied with the help of a dividing roller and, upon evaporation of the solvent (THF), was hardened by means of electron radiation, for example in a device produced by ESI (Energy Sciences, Inc.) Woburn, USA, type CB150/15/10L.

It made little difference to the adhesion whether the coating was hardened with a dose of 5 or 10 Mrad, and therefore the following table lists the average values for 10 Mrad only.

The coatings applied are polyether-urethane resins produced by DeSoto, des Plaines, Illinois (USA), available under the numbers 2764-70-120 and 2764-70-121.

The degree of adhesion between the support and the coating was determined by means of a peel-off test. The peeling speed was 10 mm/min. The quotient of force and tape width was determined. If the tape fibrillates, the measured degree of adhesion is less than the actual value (decreasing adhesive surface).

To improve the adhesion, the PE-supports were pretreated as follows:

1. electron irradiation of the PE-support in air, resulting in oxidation of the PE surface, followed by coating and hardening with 10 Mrad.

2. electron irradiation of the PE-support in vacuum, resulting in the formation of radicals at the surface, immediately followed by coating and hardening with 10 Mrad.

3. electron irradiation of the PE-support in the presence of a 50 vol.% solution of acrylic acid in water, containign $Fe^{2+}$ ions, followed by coating and hardening with 10 Mrad.

4. corona treatment of the PE-support, followed by coating and hardening with 10 Mrad.

In example I a coating of type 2764-70-120 was used.

In example II a coating of type 2764-70-121 was used.

| pre-treatment of PE-support | hardening dose | Example I degree of adhesion (N/mm) | Example II degree of adhesion (N/mm) |
|---|---|---|---|
| 1. blank | 0 Mrad | - | 0.005 |
| 2. blank | 10 Mrad | 0.06 | 0.05 |
| 3. irradiation in air | 10 Mrad | 0.05 | 0.05 |
| 4. irradiation in vacuum | 10 Mrad | 0.13 | 0.09 |
| 5. treatment with acrylic acid | 10 Mrad | 0.50 | 0.20 |
| 6. corona treatment | 10 Mrad | 0.14 | 0.35 |

In examples I and II

'blank' means that the surface of the plastic support to which the coating was applied was not chemically modified.

In example I, tests 4, 5 and 6, fibrillation occurred in the peel-off test, wich means that the fibrillation strength of the tape was the limiting factor here. The coatings of tapes 4, 5 and 6 could not be removed with adhesive tape.

Fibrillation occurred in example II, tests 5 and 6. The coatings of tapes 4, 5 and 6 could not be removed with adhesive tape.

It appears that irradiation (hardening) per se creates a certain degree of adhesion between the coating and the tape. The degree of adhesion obtainable in the case of polyester tapes (0.1-0.25 N/mm) is, however, only obtained after pre-treatment of the tape, either by means of electron irradiation, whether or not in the presence of acrylic acid, or by means of corona treatment.

Example III and Comparative Example A

The meaning of the symbols and the abbreviations used is as follows:

'PETP' : polyethylene terephthalate

'UHMWPE' : ultra-high molecular weight polyethylene

'MD' : Machine Direction

'TD' : Transverse Direction

'E' : modulus of elasticity at 1% elongation

'δ' : stress at break

'ε' : elongation at break

determined according to ASTM standard No. D-882, the distance between the clamps being 100 mm and the pulling speed 100 mm/min

'd' : thickness of the support

| | Example III UHMWPE | | Comparative Example PETP | |
|---|---|---|---|---|
| | MD | TD | MD | TD |
| E [GPa] | 6.9 | 7.2 | 5.2 | 4.5 |
| δ [GPa] | 0.62 | 0.65 | 0.27 | 0.25 |
| ε [GPa] | 65 | 41 | 85 | 130 |
| d [μm] | 5 – 10 | | 12 – 23 | |

Example III shows that the mechanical properties of the support according to the invention are better than those of the material according to the comparative example A, whereas the support is thinner.

The presence of a coating does not improve or hardly improves the mechanical properties of the tape as a whole.

## Claims

1. Ribbon-shaped support of a synthetic material with a modulus of elasticity between 6 GPa and 150 GPa and a thickness of I-25μm, obtained by thermoreversible gelation of a solution of a polyethylene with a weight-average molecular weight between $0.4 . 10^6$ and $10.0 . 10^6$, followed by stretching of the gel thus obtained, characterized in that the surface of at least one side of the support is chemically modified.

2. Support according to claim 1, characterized in that molecules or molecule groups are grafted onto the said surface.

3. Support according to claim 2, characterized in that acrylate groups are grafted onto the said surface.

4. Tape, comprising a support of a synthetic material acoording to any one of claims 1-3, characterized in that at least one side of the support is provided with a coating of a polyether-urethane resin and the surfae to which the coating is applied is chemically modified.

5. Tape according to claim 4, characterized in that the polyether-urethane resin is modified with acryl and hardened by electron irradiation.

6. Tape according to claim 4 or 5, characterized in that magnetizable particles are embedded in the polyether-urethane resin.

7. Process for the production of a tape, comprising the application to one side of a synthetic support of a coating of polyether-urethane resin and the hardening thereof by means of electron irradiation, characterized in that the support has a modulus of elasticity between 6 and 150 GPa, a thickness between 1 and 25μm, and is produced by thermoreversible gelation of a solution of a polyethylene with a weight-average molecular weight between $0.4 . 10^6$ and $10.0 . 10^6$, followed by stretching of the gel thus obtained and after-treatment comprising the chemical modification of the surface of at least one side.

8. Process according to claim 7, characterized in that molecules or molecule groups are grafted onto the said surface.

9. Process according to any one of claims 7-8, in which to only one side of the surface of the support a coating is applied, characterized in that the surface of the support is electron irradiated from the side of the support to which no polyether-urethane resin has been applied.

10. Process according to any one of claims 7-9, characterized in that the after-treatment first of all comprises drying and/or compression.

**Revendications**

1. Support en forme de ruban en un matériau synthé tique ayant un module d' élasticité compris entre 6 et 150 GPa et une épaisseur de 1 à 25 μm, qu'on obtient par géli-fication thermoréversible d' une solution d'un polyéthylène ayant une masse moléculaire moyenne en poids comprise entre $0,4 \times 10^6$ et $10,0 \times 10^6$, qu'on fait suivre d'un éti-rage du gel ainsi obtenu, caractèrisé en ce que la surface d'une face au moins du support est chimiquement modifiée.

2. Support selon la revendication 1, caractérisé en ce qu'on greffe les molécules ou les groupes de molécules sur ladite surface.

3. Support selon la revendication 2, caractérisé en ce qu'on greffe des groupes acrylates sur ladite surface.

4. Bande, comprenant un support en un matériau syn - thétique selon l'une quelconque des revendications 1 à 3, caractérisée en ce qu'une face au moins du support porte un revêtement en résine de polyéther-uréthane et en ce que la surface qui doit recevoir le revêtement est chimiquement modifiée.

5. Bande selon la revendication 4, caractérisée en ce que la résine de polyéther-uréthane est modifiée par un composé acryl ique et durcie par irradiation électronique

6. Bande selon la revendication 4 ou 5, caractérisée en ce que des particules aimantables sont noyées dans la résine de polyéther-uréthane.

7. Procédé de production d'une bande consistant à appliquer sur une face du support synthétique un revêtement en résine de poiyéther-uréthane et à faire durcir celui-ci par irradiation é1ectronique, caractérisé en ce que le sup-port présente un module d'éiasticité de 6 à 150 GPa, une épaisseur de 1 à 25 μm et qu'on le prépare par gélification thermoréversible d'une solution d'un polyêthylène ayant une masse moléculaire moyenne en poids comprise entre $0, 4 \times 10^6$ et $10,0$ et $10^6$, qu'on fait suivre d'un étirage du gel ainsi obtenu et d'un post-traitement comprenant la modifi - cation chimique de la surface sur une face au moins.

8. Procédé selon la revendication 7, caractérisé en ce qu'on greffe des molécules ou des groupes de molé - cule sur ladite surface.

9. Procédé selon la revendication 7 ou 8, selon le-quel on applique un revêtement sur une face seulement de la surface du support, caractérisé en ce qu'on irradie par un faisceau d'électrons la surface du support à partir de la face de celui-ci à laquelle on n'a pas appliqué de résine de polyéther-uréthane.

10. Procédé selon l'une quelconque des revendica-tions 7 à 9, caractérisé en ce que le post-traitement comprend tout d'abord le séchage et/ou la compression.

## Ansprüche

1. Streifenförmiger Träger aus einem synthetischen Material mit einem Elastizitätsmodul von 6 bis 150 GPa und einer Dicke von 1 bis 25 µm, erhalten durch thermoreversible Gelierung einer Lösung eines Polyäthylens mit einem gewichtsmittleren Molgewicht von $0,4 . 10^6$ bis $10,0 . 10^6$, gefolgt von Strecken des so erhaltenen Gels, dadurch gekennzeichnet, daß die OberEläche wenigstens einer Seite des Trägers chemisch modifiziert ist.

2. Träger nach Anspruch 1, dadurch gekennzeichnet, daß Moleküle oder Molekülgruppen auf diese Oberfläche gepfropft sind.

3. Träger nach Anspruch 2, dadurch gekennzeichnet, daß Acrylat-gruppen auf diese Oberfläche gepfropft sind.

4. Band, umfassend einen Träger aus einem synthetischen Material nach einem der Ansprüche 1 bis 3, dadurch gekennzeichnet, daß min-destens eine Seite des Trägers mit einem Überzug aus einem Poly-ätherurethanharz versehen ist, und die Oberfläche, auf die der Überzug aufgebracht ist, chemisch modifiziert ist.

5. Band nach Anspruch 4, dadurch gekennzeichnet, daß das Poly-ätherurethanharz acrylmodifiziert und durch Elektronenbestrahlung gehärtet ist.

6. Band nach Anspruch 4 oder 5, dadurch gekennzeichnet, daß magnetisierbare Teilchen in das Polyätherurethanharz eingebettet sind.

7. Verfahren zur Herstellung eines Bandes, das das Aufbringen eines Überzuges aus Polyätherurethanharz auf eine Seite eines syn-thetischen Trägers und das Härten desselben durch Elektronenbe-strahlung umfaßt, dadurch gekennzeichnet, daß der Träger einen Elastizitätsmodul von 6 bis 150 GPa und eine Dicke von 1 bis 25 µm aufweist und durch thermoreversible Gelierung eine Lösung eines Polyäthylens mit einem gewichtsmittleren Molgewicht von $0,4 . 10^6$ bis $10,0 . 10^6$, gefolgt von Strecken des so erhaltenen Gels und einer Nachbehandlung, die das chemische Modifizieren der Ober-fläche wenigstens einer Seite umfaßt, hergestellt wird.

8. Verfahren nach Anspruch 7, dadurch gekennzeichnet, daß Mole-küle oder Molekülgruppen auf diese Oberfläche gepfropft werden.

9. Verfahren nach einem der Ansprüche 7 bis 8, in dem auf nur eine Seite der Oberflache des Trägers ein Überzug aufgebracht wird, dadurch gekennzeichnet, daß die Trägeroberfläche von der Seite des Trägers, auf die kein Polyätherurethanharz aufgebracht wurde, elektronenbestrahlt wird.

10. Verfahren nach einem der Ansprüche 7 bis 9, dadurch gekenn-zeichnet, daß die Nachbehandlung in erster Linie Trocknen und/oder Kompression umfaßt.